(19) Europäisches Patentamt
European Patent Office
Office européen des brevets

(11) **EP 2 393 329 B1**

(12) **EUROPEAN PATENT SPECIFICATION**

(45) Date of publication and mention
of the grant of the patent:
**26.07.2017 Bulletin 2017/30**

(51) Int Cl.:
**H04W 52/12** *(2009.01)*        **H04W 52/14** *(2009.01)*
**H04W 52/24** *(2009.01)*        **H04W 52/28** *(2009.01)*

(21) Application number: **10791443.4**

(22) Date of filing: **07.06.2010**

(86) International application number:
**PCT/CN2010/073619**

(87) International publication number:
**WO 2010/148937 (29.12.2010 Gazette 2010/52)**

(54) **OUTER RING POWER CONTROLLING METHOD FOR HIGH-SPEED PHYSICAL DOWNLINK SHARED CHANNEL AND DEVICE THEREOF**

AUSSENRING-STROMSTEUERUNGSVERFAHREN FÜR EINEN MEHRFACH GENUTZTEN PHYSIKALISCHEN HOCHGESCHWINDIGKEITS-DOWNLINK-KANAL SOWIE GERÄT DAFÜR

PROCÉDÉ DE COMMANDE DE PUISSANCE D'ANNEAU EXTÉRIEUR POUR CANAL PARTAGÉ DE LIAISON DESCENDANTE PHYSIQUE À HAUT DÉBIT ET DISPOSITIF ASSOCIÉ

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.06.2009   CN 200910147395**

(43) Date of publication of application:
**07.12.2011   Bulletin 2011/49**

(73) Proprietor: **ZTE Corporation**
**Shenzhen, Guangdong 518057 (CN)**

(72) Inventor: **LI, Ruifeng**
**Shenzhen**
**Guangdong 518057 (CN)**

(74) Representative: **Manitz Finsterwald Patentanwälte PartmbB**
**Martin-Greif-Strasse 1**
**80336 München (DE)**

(56) References cited:
**EP-A1- 1 503 522        CN-A- 1 852 073**
**CN-A- 101 052 222        CN-A- 101 159 455**
**CN-A- 101 247 150        CN-A- 101 626 614**
**US-A1- 2006 293 075**

**Description**

Technical Field

The present invention relates to the field of High-Speed Packet Access (HSPA+), and more especially, to an outer loop power controlling method for high-speed physical downlink shared channel (HS-PDSCH) and device thereof.

Background of the Related Art

A key technology in High Speed Downlink Packet Access (HSDPA) technology and its subsequent evolved HSPA+ is link adaptive technology, that is, user equipment (UE) reports Channel Quality Indicator (CQI), and reports CQI in the HSPA+ or supports the Quadrature Phase Shift Keying (QPSK), 16-phase quadrature amplitude modulation (QAM) mode in original HSDPA, and 64QAM and Multiple-Input Multiple Output (MIMO) function are newly added, therefore, the CQI adjustment algorithm needs to be more accurately controlled, otherwise, there is relatively high block error ratio (BLER) and correspondingly reduced HSPA+ throughput.

The features of the preamble of the independent claims are known from EP1503522A1. Related technologies are also known from US2006293075A1.

Summary of the Invention

The technical problem to be solved by the present invention is to provide an outer loop power controlling method for high-speed physical downlink shared channel (HS-PDSCH) and device thereof to be applicable in the R5 and R7 system including the 64QAM and MIMO in the HSPA+, thereby improving the HSPA+ throughput.

In order to solve the above problem, the present invention discloses an outer loop power controlling method for the HS-PDSCH, and the method comprises:

High Speed Downlink Packet Access (HSDPA) scheduler classifies all Channel Quality Indicators (CQI) that might be reported by user equipment (UE), and each type of CQIs is respectively configured with the corresponding High Speed Downlink Shared Channel (HSDSCH) outer loop adjustment unit value K and an outer loop adjustment value *swAdjCqi,* the corresponding *swAdjCqi* of each type of CQIs is initialized to be 0; and

when said HSDPA scheduler receives an acknowledge response (ACK) from said UE via the High Speed Dedicated Physical Control Channel (HSDPCCH), it adjusts the *swAdjCqi* corresponding to CQI on which the scheduling package corresponding to the ACK is based by J upward; when said HSDPA receives a negative acknowledgement response (NACK) returned by the UE via the HSDPCCH, it adjusts the *swAdjCqi* corresponding to CQI on which the scheduling package corresponding to the NACK is based by J*K downward, and said HSDPA scheduler select the size of a transport block used in the next scheduling according to the adjusted *swAdjCqi,* wherein J is an integer.

Before the step of configuring each type of CQIs with the corresponding HSDSCH outer loop adjustment unit value K, the method also comprises: said HSDPA scheduler sets a target block error rate (BLER) for each type of CQIs, wherein, K=(1-target BLER)/target BLER.

The method comprises: said HSDPA scheduler also configures all CQIs that might be reported by the UE with a HSDSCH total outer loop adjustment unit value M and a total outer loop adjustment value *swAdjTotalCqi*, and initializes said *swAdjTotalCqi* to be zero, wherein M is 0.01 to 0.03 times of K;

when said HSDPA scheduler receives the ACK returned by said UE via the HSDPCCH, it adjusts said *swAdjTotalCqi* by J upward; When said HSDPA scheduler receives the NACK returned by said UE via the HSDPCCH, it adjusts said *swAdjTotalCqi* by J*M downward; and

In the step of selecting the size of the transport block used in the next scheduling, said HSDPA scheduler selects the size of the transport block used in the next scheduling according to the adjusted *swAdjCqi* and *swAdjTotalCqi.*

Wherein, said step of said HSDPA scheduler classifying the value of CQIs that might be reported by the UE comprises: said HSDPA scheduler implements classification according to the values of the CQIs that might be reported by the UE, and each type of CQIs corresponds to one possible value of the CQIs respectively; or

said HSDPA scheduler implements classification according to the capability level of the UE corresponding to the CQI that might be reported by the UE, and each type of CQIs corresponds to one capability level of the UE respectively; or

said HSDPA scheduler implements classification according to the modulation mode corresponding to the CQIs that might be reported by said UE, and each type of CQIs corresponds to one modulation mode respectively.

The value of said J can be 1, 2, 3, 4, or 5.

The present invention also discloses one HS-PDSCH outer loop power controlling device, and said device comprises a configuration module and a receiving and processing module which are connected with each other,
said configuration module is configured to: classify all Channel Quality Indicators (CQI) that might be reported by the UE, respectively configuring each type of CQIs with the corresponding High Speed Downlink Shared Channel (HSDSCH) outer loop adjustment unit value K and the outer loop adjustment value *swAdjCqi*, and initializing the *swAdjCqi* corresponding to each type of CQIs to be 0;

Said receiving and processing module is configured to: receive an acknowledgement response (ACK) or a negative acknowledgement response (NACK) returned by the UE via High Speed Dedicated Physical Control Channel (HSDPCCH), and when receiving said ACK, adjust the *swAdjCqi* corresponding to CQI on which the scheduling package corresponding to the ACK is based in said configuration module by J upward; when receiving said NACK, adjust the *swAdjCqi* corresponding to CQI on which the scheduling package corresponding to the NACK is based in said configuration module by J*K downward, and select the size of a transport block used in the next scheduling according to the adjusted *swAdjCqi,* wherein J is an integer.

In the abovementioned device, said configuration module is configured to: set a target block error ratio (BLER) for each type of CQIs, and set a corresponding HSDSCH outer loop adjustment unit value K for each type of CQIs respectively wherein, K=(1-target BLER)/target BLER.

In the abovementioned device, said configuration module is also configured to: configure all CQIs that might be reported by the UE with a HSDSCH total outer loop adjustment unit value M and a total outer loop adjustment value *swAdjTotalCqi,* and initialize said *swAdjTotalCqi* to be zero, wherein M is 0.01 to 0.03 times of K;

said receiving and processing module is also configured to: when receiving said ACK, adjust said *swAdjTotalCqi* by J upward; when receiving said NACK, adjust said *swAdjTotalCqi* by J*K downward, and

using the following method to select the size of the transport block used in the next scheduling: selecting the size of the transport block used in the next scheduling according to the adjusted *swAdjCqi* and *swAdjTotalCqi.*

Wherein, said configuration module is also configured to: implement classification according to the values of the CQIs that might be reported by the UE, and each type of CQIs corresponds to one value of the CQIs respectively; or implementing classification according to the capability levels of the UE corresponding to the CQIs that might be reported by the UE, and each type of CQIs corresponds to one capability level of the UE respectively; or implementing classification according to the modulation mode corresponding to the CQIs that might be reported by said UE, and each type of CQIs corresponds to one modulation mode respectively.

The value of said J can be 1, 2, 3, 4, or 5.

The present invention provides a technical scheme for HS-PDSCH outer loop power controlling in the subsequent evolved version HSPA+ system of WCDMA or TD-SCDMA including supporting 64QAM and MIMO, and the present invention improves the HSPA+ throughput and maintains the BLER relatively low at the same time.

Brief Description of Drawings

FIG. 1 is a structure schematic diagram of the HSDPA scheduler in accordance with an embodiment of the present invention;

FIG. 2 is a flow chart of the scheduler shown in FIG. 1 implementing the HS-PDSCH outer loop power controlling;

FIG. 3 is a flow chart of performing HS-PDSCH outer loop power controlling of the HSPA+ applied in 64QAM mode in accordance with an embodiment of the present invention;

FIG. 4 is a flow chart of HS-PDSCH outer loop power controlling applied in the scenario of MIMO in accordance with an embodiment of the present invention.

Preferred Embodiments of the Present Invention

The main idea of the present invention is providing a processing method regarding High-Speed Physical Downlink Shared Channel (HS-PDSCH) outer loop power controlling applied in the HSDPA and HSPA+, and at first, set a different target Block Error Ratio (BLER) for each type of Channel Quality Indicator (CQI) reported by the UE, and then carry out detailed adjustment according to the target BLER to finally make the HSPA+ reach to the ideal throughput.

The technical scheme of the present invention will be illustrated in further detail with combination of the accompanying figures and specific embodiments below.

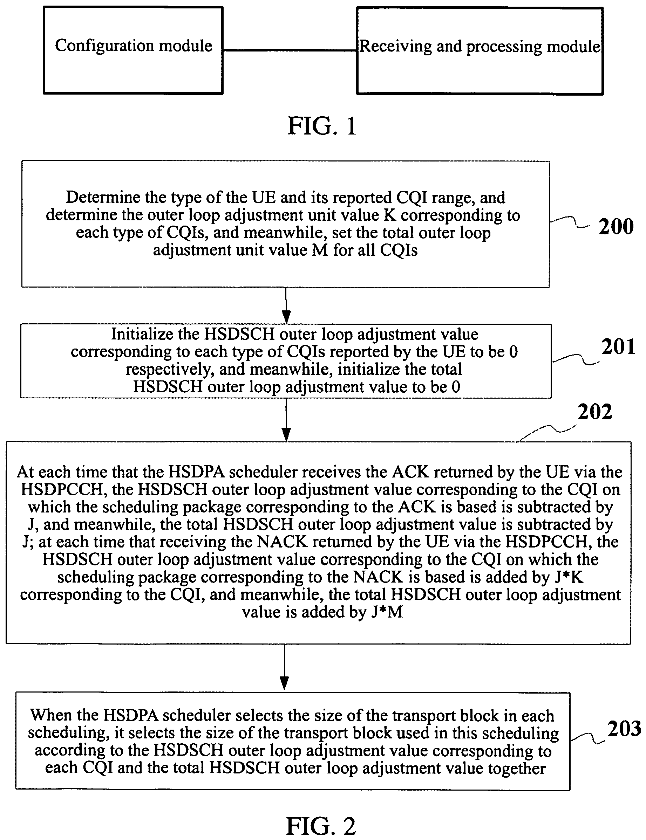

A HS-PDSCH outer loop power controlling device, which is a HSDPA scheduler in this embodiment, as shown in FIG. 1, comprises a configuration module and a receiving and processing module that are connected with each other. The function of each module will be introduced in the following.

The configuration module is used to classify all CQIs that might be reported by the UE, and at first set a target BLER for each type of CQIs, then configure each type of CQIs with the corresponding HSDSCH outer loop adjustment unit value K respectively, wherein K=(1-target BLER)/target BLER, and configure the HSDSCH total outer loop adjustment unit value M, wherein M is 0.01 to 0.03 times of K; meanwhile configure the HSDSCH outer loop adjustment value *swAdjCqi* corresponding to each type of CQIs and the total outer loop adjustment value *swAdjTotalCqi,* and initialize *swAdjCqi* corresponding to each type of CQIs to be 0 respectively, and also initialize the *swAdjTotalCqi* to be 0;

Wherein, said configuration module is also used to classify the CQIs according to the values of the CQIs that might be reported by the UE, and each type of CQIs corresponds to one value of CQIs respectively; or, implement classification according to the capability levels of the UE corresponding to the CQIs that might be reported by the UE, and each type of CQIs corresponds to one capability level of the UE; or, implement classification according to the modulation modes of the CQIs that might be reported by said UE, and each type of CQIs corresponds to one modulation mode.

Said receiving and processing module is used to receive the acknowledgement response (ACK) or negative acknowledgement response (NACK) returned from said UE via the HSDPCCH, and when receiving said ACK, adjust the *swAdjCqi* corresponding to CQI on which the scheduling package corresponding to the ACK is based in the configuration module by J upward and adjust said *swAdjTotalCqi* by J upward; when receiving said NACK, adjust the *swAdjCqi* corresponding to CQI on which the scheduling package corresponding to the NACK is based in the configuration module by J*K downward and adjust said *swAdjTotalCqi* by J*M downward, moreover, and select the size of the transport block used in the next scheduling according to the adjusted *swAdjCqi* as well as *swAdjTotalCqi,* wherein J is an integer and is preferably 1, 2, 3, 4, or 5.

The procedure of the abovementioned device implementing HS-PDSCH outer loop power control will be introduced in the following, and as shown in FIG. 2, the procedure comprises the following steps:

Step 200: at first, determine the type of the UE and its reported CQI range, and determine the outer loop adjustment unit value K corresponding to each type of CQIs; meanwhile, set the total outer loop adjustment unit value M for all CQIs (according to practical conditions, M can be set as a certain proportion of K, such as 0.01 to 0.03 of K);

In this step, classify the CQIs according to the values of CQIs that might be reported by the UE, that is, each type of CQIs corresponds to one value of the CQIs respectively; or, classify the CQIs according to the capability levels of the UE corresponding to the CQIs that might be reported by said UE, that is, each type of CQIs corresponds to one capability level of the UE respectively; or, classify the CQIs according to the modulation modes of the CQIs that might be reported by the UE, that is, each type of CQIs corresponds to one modulation mode respectively;

wherein, set the total outer loop adjustment unit value M for all CQIs, mainly to compensate the HSDSCH outer loop adjustment value on the whole to maintain a certain BLER as a whole and avoid too large fluctuation in the overall BLER, herein M functions as assistance in the adjustment.

Step 201: Denote the HSDSCH outer loop adjustment value corresponding to each type of CQIs reported by the UE as *swAdjCqi* respectively, initialize *swAdjCqi* to be 0; meanwhile, denote the total HSDSCH outer loop adjustment value as *swAdjTotalCqi*, and initialize *swAdjTotalCqi* to be 0;

Step 202: When said HSDPA scheduler receives an ACK returned from said UE via the HSDPCCH, subtract the outer loop adjustment value *swAdjCqi* corresponding to CQI on which the scheduling package corresponding to the ACK is based by J (that is, adjust the *swAdjCqi* by J upward), and meanwhile subtract total HSDSCH outer loop adjustment value by J; when receiving a NACK returned from the UE via the HSDPCCH, add the outer loop adjustment value *swAdjCqi* corresponding to CQI on which the scheduling package corresponding to the NACK is based by the value of J*K corresponding to the CQI (that is, adjust the *swAdjCqi* by J*K downward), and add total HSDSCH outer loop adjustment value by J*M;

wherein J is an integer and is preferably 1, 2, 3, 4, or 5.

Step 203: When the HSDPA scheduler selects the size of a transport block (TBSize) in each scheduling, it selects the TBSize used in the scheduling according to the *swAdjTotalCqi* and the *swAdjCqi* corresponding to each CQI together.

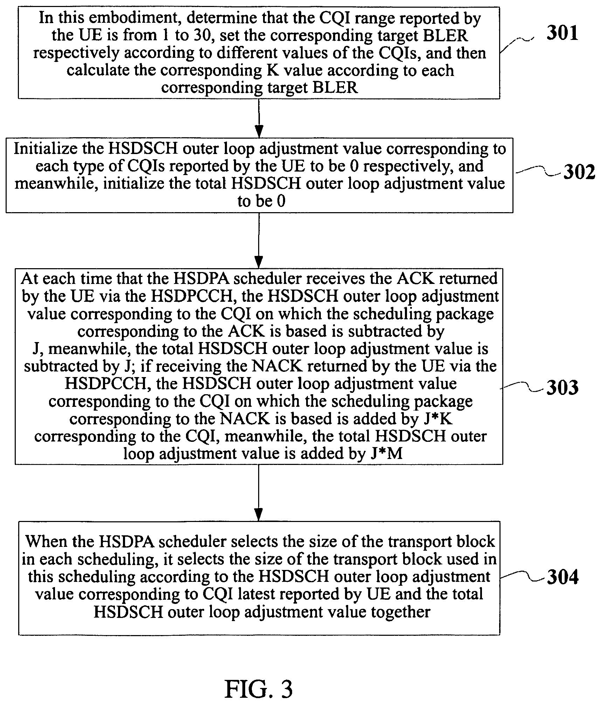

The abovementioned procedure will be illustrated in the following with combination of the scenario of 64QAM in the HSPA+, and as shown in FIG. 3, the procedure comprises the following steps:

Step 301: in this embodiment, determine the CQI range reported by the UE is from 1 to 30, and set the corresponding target BLER according to different values of the CQIs, and calculate the corresponding K value according to each target BLER, wherein, K=(1-target BLER)/target BLER;

In other embodiments, classify the CQIs according to the capability levels of the UE corresponding to the CQIs reported by the UE, therefore, each type of CQIs corresponds to one capability level of the UE respectively, for example, the capability level of the UE for supporting the 64QAM is 14, when the CQI range reported by the UE corresponding to this capability level is from 1 to 15, it indicates that the corresponding modulation mode is QPSK, the CQIs whose values are from 1 to 15 are classified as the same type of CQIs; when the reported CQI range is from 16 to 25, it indicates the corresponding modulation mode is 16QAM, the CQIs whose values are from 16 to 25 are classified as the same type of CQIs; when the reported CQI range is from 26 to 30, it indicates that the corresponding modulation mode is 64QAM, and the CQIs whose values are from 26 to 30 are classified as the same type of CQIs, wherein, the corresponding modulation mode is 64QAM, and it is considered that the target BLER of the 64QAM modulation mode can be controlled smaller, and since the modulation mode is 64QAM, it has more strict requirements for channel condition, moreover, it is considered that M can be set smaller to function as assistance in the adjustment.

Step 302: denote the HSDSCH outer loop adjustment value corresponding to each type of CQIs reported by the UE as *swAdjCqi* respectively, and initialize *swAdjCqi* to be 0; meanwhile, denote the total HSDSCH outer loop adjustment value as *swAdjTotalCqi,* and initialize *swAdjTotalCqi* to be 0;

Step 303: at each time that the HSDPA scheduler receives the ACK returned by the UE via the HSDPCCH, the outer loop adjustment value *swAdjCqi* corresponding to the CQI on which the scheduling package corresponding to the ACK is based is subtracted by J, and meanwhile the total HSDSCH outer loop adjustment value *swAdjTotalCqi* is subtracted by J; if receiving the NACK returned by the UE via the HSDPCCH, the outer loop adjustment value *swAdjCqi* corresponding to the CQI on which the scheduling package corresponding to the NACK is based is added by J*K corresponding to the CQI, and the total HSDSCH outer loop adjustment value *swAdjTotalCqi* is added by J*M;

Step 304: when the HSDPA scheduler selects the TBSize in each scheduling, select the TBSize used in this scheduling according to *swAdjCqi* corresponding to the CQI latest reported by the UE and *swAdjTotalCqi* together.

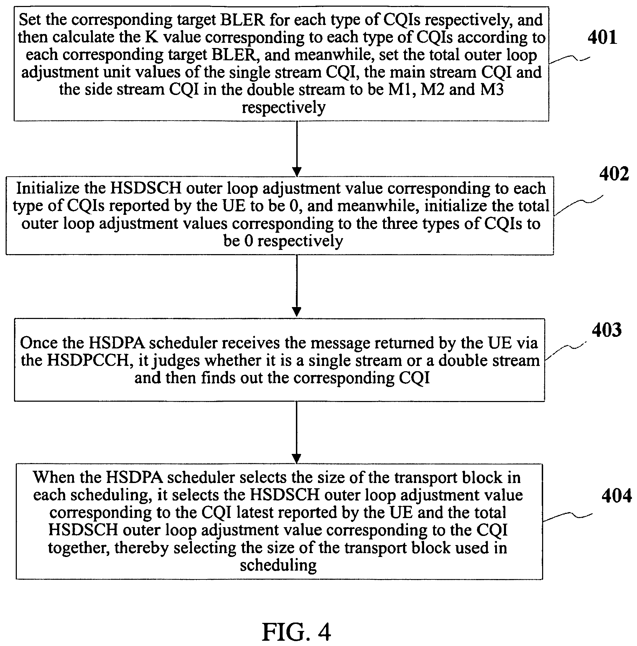

The following is an introduction of the abovementioned method applying in the scenario of MIMO in the HSPA+, and as shown in FIG. 4, the procedure specifically comprises the following steps:

Step 401: since there are two types of CQIs, Type A and Type B, reported by the MIMO UE, and single stream and double stream can be scheduled at the same time, MIMO has three types of CQIs: single stream CQI, whose corresponding CQI value range is from 1 to 30; the main stream CQI and side stream CQI in the double stream CQI, and the CQI value range corresponding to these two CQI types is from 0 to 14. Set the corresponding target BLER for each type of CQIs, and calculate the K value corresponding to each type of CQIs according to each corresponding target BLER, wherein, K=(1-target BLER)/target BLER, and meanwhile, set the total outer loop adjustment unit values of the single stream CQI and the main stream CQI and side stream CQI in the double stream as M1, M2 and M3 respectively, mainly to compensate the HSDSCH outer loop adjustment deviation of the local CQI on the whole;

Step 402: denote the HSDSCH outer loop adjustment value corresponding to each type of CQIs reported by the UE as *swAdjCqi,* and initialize *swAdjCqi* to be 0; meanwhile, denote the total outer loop adjustment values corresponding to the three types of CQIs as *swAdjTotalCqi1*, *swAdjTotalCqi2* and *swAdjTotalCqi3* respectively, and initialize *swAdjTotalCqi1*, *swAdjTotalCqi2* and *swAdjTotalCqi3* to be 0;

Step 403: At each time that the HSDPA scheduler receives the message returned by the UE via the HSDPCCH, it judges whether it is double stream or single stream, so as to find out the corresponding CQI, for example, when the UE returns an ACK, subtract the outer loop adjustment value *swAdjCqi* corresponding to this type of CQIs on which the scheduling package corresponding to the ACK is based by J, and meanwhile, subtract the total outer loop adjustment value *swAdjTotalCqi* corresponding to this type of CQIs by J; if receiving the NACK returned by the UE via the HSDPCCH, add the outer loop adjustment value *swAdjCqi* corresponding to this type of CQI on which the scheduling package corresponding to the NACK is based by J*K corresponding to the CQI, and add the total outer loop adjustment value *swAdjTotalCqi* corresponding to this type of CQIs by J*M;

Step 404: when the HSDPA scheduler selects the TBSize in each scheduling, select *swAdjCqi* corresponding to the CQI latest reported by the UE and total outer loop adjustment value *swAdjTotalCqi* corresponding to this type of CQI together, thereby selecting the TBSize used in scheduling.

From the above embodiments, it can be seen that the technical scheme of the present invention sets different target BLER for each type of CQIs reported by the UE so as to carry out detailed adjustment for each type of CQIs, and improve the HSPA+ throughput well, and meanwhile, since the target BLER is set relatively low, thereby controlling relatively low BLER.

The above descriptions are only preferred embodiments of the present invention rather than the restriction of the scope of the present invention, and for those skilled in the art, there are different kinds of modifications and changes in the present invention. Without departing from the scope as defined in claims of the present invention, all these types of modification, equivalent replacement or improvements should be included in the protection scope of the present invention.

Industrial Applicability

The present invention provides a technical scheme for HS-PDSCH outer loop power controlling in the subsequent evolved version HSPA+ system of WCDMA or TD-SCDMA including supporting 64QAM and MIMO, so as to improve the HSPA+ throughput well and control relatively low BLER at the same time.

**Claims**

1. An outer loop power controlling method for a high-speed physical downlink shared channel, HS-PDSCH, comprising:

    a high speed downlink packet access, HSDPA, scheduler classifying (200, 301, 401) all channel quality indicators, CQI, that might be reported by user equipment (UE), and each type of CQIs being (200) configured respectively with a corresponding high-speed downlink shared channel, HSDSCH, outer loop adjustment unit value K and an outer loop adjustment value (*swAdjCqi*), the *swAdjCqi* corresponding to each type of CQIs being (201, 302, 402) initialized to be 0 respectively; and
    when said HSDPA scheduler receives an acknowledgement response, ACK, returned from said UE via a high-speed dedicated physical control channel, HSDPCCH, adjusting (202, 303, 403) the *swAdjCqi* corresponding to CQI on which a scheduling package corresponding to the ACK is based by J upward; when said HSDPA scheduler receives a negative acknowledgement response, NACK, returned by the UE via the HSDPCCH, adjusting (202, 303, 403) the *swAdjCqi* corresponding to CQI on which the scheduling package corresponding to the NACK is based by J*K downward, said HSDPA scheduler selecting (203, 304, 404) a size of a transport block used in a next scheduling according to the adjusted *swAdjCqi,* wherein J is an integer.

2. The method of claim 1, before the step of configuring (200, 301, 401) each type of CQIs with the corresponding HSDSCH outer loop adjustment unit value K respectively, the method also comprising: at first, said HSDPA scheduler setting a target block error ratio, BLER, for each type of CQIs, wherein,

$$K=(1\text{-target BLER})/\text{target BLER}.$$

3. The method of claim 1, the method comprising:

    said HSDPA scheduler also configuring (200, 301, 401) all CQIs that might be reported by the UE with a HSDSCH total outer loop adjustment unit value M and a total outer loop adjustment value (*swAdjTotalCqi*), and initializing (201, 302, 402) said *swAdjTotalCqi* to be zero, wherein M is 0.01 to 0.03 times of K;
    when said HSDPA scheduler receives the ACK returned by said UE via the HSDPCCH, adjusting (202, 303, 403) said *swAdjTotalCqi* by J upward; when said HSDPA scheduler receives the NACK returned by said UE via the HSDPCCH, adjusting (202, 303, 403) said *swAdjTotalCqi* by J*M downward; and
    in the step of selecting (203, 304, 404) the size of the transport block used in the next scheduling, said HSDPA scheduler selecting (203, 304, 404) the size of the transport block used in the next scheduling according to the adjusted *swAdjCqi* and *swAdjTotalCqi.*

4. The method of claim 1, 2, or 3, wherein said step of said HSDPA scheduler classifying (200, 301, 401) values of CQIs that might be reported by the UE comprises:

    said HSDPA scheduler implementing (401) classification according to the values of the CQIs that might be reported by the UE, and each type of CQIs corresponding to one value of the CQIs respectively.

5. The method of claim 1, 2, or 3, wherein said step of said HSDPA scheduler classifying (200, 301, 401) values of CQIs that might be reported by the UE comprises:

said HSDPA scheduler implementing classification according to capability levels of the UE corresponding to the CQIs that might be reported by the UE, and each type of CQIs corresponding to one capability level of the UE respectively.

6. The method of claim 1, 2, or 3, wherein said step of said HSDPA scheduler classifying (200, 301, 401) values of CQIs that might be reported by the UE comprises:

said HSDPA scheduler implementing classification according to modulation modes corresponding to the CQIs that might be reported by said UE, and each type of CQIs corresponding to one modulation mode respectively.

7. The method of claim 4, 5 or 6, wherein
a value of said J can be 1, 2, 3, 4, or 5.

8. A high-speed physical downlink shared channel, HS-PDSCH, outer loop power controlling device, comprising a configuration module and a receiving and processing module which are connected with each other,
said configuration module is configured to:

classify all channel quality indicators, CQI, that might be reported by user equipment (UE),
configure each type of CQIs respectively with a corresponding high-speed downlink shared channel, HSDSCH, outer loop adjustment unit value K and an outer loop adjustment value (*swAdjCqi*), and
initialize the *swAdjCqi* corresponding to each type of CQIs to be 0 respectively;
said receiving and processing module is configured to: receive an acknowledgement response, ACK, or a negative acknowledgement response, NACK, returned by the UE via a high-speed dedicated physical control channel, HSDPCCH, when receiving said ACK, adjust the *swAdjCqi* corresponding to the CQI on which a scheduling package corresponding to the ACK is based in said configuration module by J upward;
when receiving said NACK, adjust the *swAdjCqi* corresponding to the CQI on which the scheduling package corresponding to the NACK is based in said configuration module by J*K downward, and
select a size of a transport block used in a next scheduling according to the adjusted *swAdjCqi,* wherein, J is an integer.

9. The device of claim 8, wherein
said configuration module is also configured to: at first, set a target block error ratio, BLER, for each type of CQIs, and configure each type of CQIs respectively with the corresponding HSDSCH outer loop adjustment unit value K, wherein, K=(1-target BLER)/target BLER.

10. The device of claim 8, wherein
said configuration module is also configured to: configure all CQIs that might be reported by the UE with a HSDSCH total outer loop adjustment unit value M and a total outer loop adjustment value (*swAdjTotalCqi*), and initialize said *swAdjTotalCqi* to be zero, wherein M is 0.01 to 0.03 times of K;
said receiving and processing module is also configured to:

when receiving said ACK, adjust said *swAdjTotalCqi* by J upward;
when receiving said NACK, adjust said *swAdjTotalCqi* by J*M downward, and
use a following method to select the size of the transport block used in the next scheduling: selecting the size of the transport block used in the next scheduling according to the adjusted *swAdjCqi* and *swAdjTotalCqi*.

11. The device of claim 8, 9, or 10, wherein said configuration module is also configured to:

implement classification according to values of the CQIs that might be reported by the UE, and each type of CQIs corresponds to one value of the CQIs respectively.

12. The device of claim 8, 9, or 10, wherein said configuration module is also configured to:

implement classification according to capability levels of the UE corresponding to the CQIs that might be reported by the UE, and each type of CQIs corresponds to one capability level of the UE respectively.

**13.** The device of claim 8, 9, or 10, wherein said configuration module is also configured to:

implement classification according to modulation modes corresponding to the CQIs that might be reported by said UE, and each type of CQIs corresponds to one modulation mode respectively.

**14.** The device of claim 11, 12 or 13, wherein
a value of said J can be 1, 2, 3, 4, or 5.

**Patentansprüche**

**1.** Außenring-Stromsteuerungsverfahren für einen mehrfach genutzten physikalischen Hochgeschwindigkeits-Downlink-Kanal HS-PDSCH, das umfasst, dass:

ein Hochgeschwindigkeits-Downlink-Paketzugriffs-Steuerprogramm HSDPA-Steuerprogramm alle Kanalqualitätsindikatoren CQI klassifiziert (200, 301, 401), die von einem Anwendergerät (UE) gemeldet werden könnten, und wobei jeder Typ von CQI jeweils mit einem Wert K einer Außenring-Justierungseinheit und einem Außenring-Justierungswert (swAdjCqi) eines entsprechenden mehrfach genutzten Hochgeschwindigkeits-Downlink-Kanals HSDSCH konfiguriert ist (200), wobei der Justierungswert swAdjCqi, der jedem Typ von CQI entspricht, jeweils auf 0 initialisiert wird (201, 302, 402); und
wenn das HSDPA-Steuerprogramm eine positive Bestätigungsantwort ACK empfängt, die von dem UE über einen dedizierten physikalischen Hochgeschwindigkeits-Steuerungskanal HSDPCCH zurückgegeben wird, der Justierungswert swAdjCqi, der dem CQI entspricht, auf welchem ein Steuerungspaket beruht, das der ACK entspricht, um J nach oben verstellt wird (202, 303, 403); wenn das HSDPA-Steuerprogramm eine negative Bestätigungsantwort NACK empfängt, die von dem UE über den HSDPCCH zurückgegeben wird, der Justierungswert swAdjCqi, der dem CQI entspricht, auf welchem das Steuerungspaket beruht, das der NACK entspricht, um J*K nach unten verstellt wird (202, 303, 403), das HSDPA-Steuerprogramm eine Größe eines Transportblocks, der bei einer nächsten Ablaufplanung verwendet wird, in Übereinstimmung mit dem verstellten Justierungswert swAdjCqi wählt (203, 304, 404), wobei J eine ganze Zahl ist.

**2.** Verfahren nach Anspruch 1,
wobei das Verfahren vor dem Schritt des Konfigurierens (200, 301, 401) jedes Typs von CQI jeweils mit dem entsprechenden Wert K der HSDSCH-Außenring-Justierungseinheit außerdem umfasst, dass:

das HSDPA-Steuerprogramm zuerst ein Ziel-Blockfehlerverhältnis BLER für jeden Typ von CQI einstellt, wobei

$$K = (1 - \text{Ziel-BLER}) / \text{Ziel-BLER}.$$

**3.** Verfahren nach Anspruch 1, wobei das Verfahren umfasst, dass:

das HSDPA-Steuerprogramm außerdem alle CQIs, die von dem UE gemeldet werden könnten, mit einem Gesamtwert M der HSDSCH-Außenring-Justierungseinheit und einem Außenring-Justierungs-Gesamtwert (swAdjTotalCqi) konfiguriert (200, 301, 401), und den Justierungs-Gesamtwert swAdjTotalCqi auf Null initialisiert (201, 302, 402), wobei M das 0,01-fache bis das 0,03-fache von K ist;
wenn das HSDPA-Steuerprogramm die ACK empfängt, die von dem UE über den HSDPCCH zurückgegeben wurde, der Justierungs-Gesamtwert swAdjTotalCqi um J nach oben verstellt wird (202, 303, 403); wenn das HSDPA-Steuerprogramm die NACK empfängt, die von dem UE über den HSDPCCH zurückgegeben wurde, der Justierungs-Gesamtwert swAdjTotalCqi um J*M nach unten verstellt wird (202, 303, 403); und
bei dem Schritt des Wählens (203, 304, 404) der Größe des Transportblocks, der bei der nächsten Ablaufplanung verwendet wird, das HSDPA-Steuerprogramm die Größe des Transportblocks, der in der nächsten Ablaufplanung verwendet wird, in Übereinstimmung mit den verstellten Werten swAdjCqi und swAdjTotalCqi wählt.

**4.** Verfahren nach Anspruch 1, 2 oder 3,
wobei der Schritt, dass das HSDPA-Steuerprogramm Werte von CQIs klassifiziert (200, 301, 401), die von dem UE gemeldet werden könnten, umfasst, dass:

das HSDPA-Steuerprogramm eine Klassifizierung in Übereinstimmung mit den Werten der CQIs, die von dem UE gemeldet werden könnten, implementiert (401), und wobei jeder Typ von CQI jeweils einem Wert der CQIs entspricht.

5. Verfahren nach Anspruch 1, 2 oder 3,
wobei der Schritt, dass das HSDPA-Steuerprogramm Werte von CQIs klassifiziert (200, 301, 401), die von dem UE gemeldet werden könnten, umfasst, dass:

das HSDPA-Steuerprogramm eine Klassifizierung in Übereinstimmung mit Kapazitätsebenen des UEs implementiert, welche den CQIs entsprechen, die von dem UE gemeldet werden könnten, und wobei jeder Typ von CQI jeweils einer Kapazitätsebene des UE entspricht.

6. Verfahren nach Anspruch 1, 2 oder 3,
wobei der Schritt, dass das HSDPA-Steuerprogramm Werte von CQIs klassifiziert (200, 301, 401), die von dem UE gemeldet werden könnten, umfasst, dass:

das HSDPA-Steuerprogramm eine Klassifizierung in Übereinstimmung mit Modulationsmodi implementiert, welche den CQIs entsprechen, die von dem UE gemeldet werden könnten, und wobei jeder Typ von CQI jeweils einem Modulationsmodus entspricht.

7. Verfahren nach Anspruch 4, 5 oder 6,
wobei ein Wert von J 1, 2, 3, 4 oder 5 sein kann.

8. Außenring-Stromsteuerungsvorrichtung für einen mehrfach genutzten physikalischen Hochgeschwindigkeits-Downlink-Kanal HS-PDSCH, die ein Konfigurationsmodul und ein Empfangs- und Verarbeitungsmodul, die miteinander verbunden sind, umfasst,
wobei das Konfigurationsmodul ausgestaltet ist, um:

alle Kanalqualitätsindikatoren CQI zu klassifizieren, die von einem Anwendergerät (UE) gemeldet werden könnten,
jeden Typ von CQI jeweils mit einem Wert K einer Außenring-Justierungseinheit für einen entsprechenden mehrfach genutzten Hochgeschwindigkeits-Downlink-Kanal und mit einem Außenring-Justierungswert (swAdjCqi) zu konfigurieren, und
den Justierungswert swAdjCqi, der jedem Typ von CQI entspricht, jeweils auf 0 zu initialisieren;

wobei das Empfangs- und Verarbeitungsmodul ausgestaltet ist, um:

eine positive Bestätigungsantwort ACK oder eine negative Bestätigungsantwort NACK zu empfangen, die von dem UE über einen dedizierten, physikalischen Hochgeschwindigkeits-Steuerungskanal HSDPCCH zurückgegeben wird,
wenn die ACK empfangen wird, den Justierungswert swAdjCqi, der dem CQI entspricht, auf welchem ein Steuerpaket, das der ACK entspricht, in dem Konfigurationsmodul beruht, um J nach oben zu verstellen;
wenn die NACK empfangen wird, den Justierungswert swAdjCqi, der dem CQI entspricht, auf welchem das Steuerpaket, das der NACK entspricht, in dem Konfigurationsmodul beruht, um J*K nach unten zu verstellen, und
eine Größe eines Transportblocks zu wählen, der bei einer nächsten Ablaufplanung in Übereinstimmung mit dem verstellten Justierungswert swAdjCqi verwendet wird, wobei J eine ganze Zahl ist.

9. Vorrichtung nach Anspruch 8, wobei
das Konfigurationsmodul außerdem ausgestaltet ist, um: zuerst ein Ziel-Blockfehlerverhältnis BLER für jeden Typ von CQI einzustellen, und um jeden Typ von CQI jeweils mit dem Wert K der entsprechenden HSDSCH-Außenring-Justierungseinheit zu konfigurieren, wobei $K = (1 - \text{Ziel-BLER}) / \text{Ziel-BLER}$.

10. Vorrichtung nach Anspruch 8, wobei

das Konfigurationsmodul außerdem ausgestaltet ist, um:

alle CQIs, die von dem UE gemeldet werden könnten, mit einem Gesamtwert M einer HSDSCH-Außenring-Justierungseinheit und mit einem Außenring-Justierungs-Gesamtwert (swAdjTotalCqi) zu konfigurieren, und den Justierungs-Gesamtwert swAdjTotalCqi auf Null zu initialisieren, wobei M das 0.01-fache bis das 0,03-fache von K ist;

das Empfangs- und Verarbeitungsmodul außerdem ausgestaltet ist, um:

wenn die ACK empfangen wird, den Justierungs-Gesamtwert swAdjTotalCqi um J nach oben zu verstellen; wenn die NACK empfangen wird, den Justierungs-Gesamtwert swAdjTotalCqi um J*M nach unten zu verstellen, und ein nachfolgendes Verfahren zu verwenden, um die Größe des Transportblocks zu wählen, der bei der nächsten Ablaufplanung verwendet wird:

Wählen der Größe des Transportblocks, der bei der nächsten Ablaufplanung verwendet wird, in Übereinstimmung mit dem verstellten Justierungswert swAdjCqi und dem verstellten Justierungs-Gesamtwert swAdjTotalCqi.

11. Vorrichtung nach Anspruch 8, 9 oder 10,
wobei das Konfigurationsmodul außerdem ausgestaltet ist, um:

eine Klassifizierung in Übereinstimmung mit Werten der CQIs zu implementieren, die von dem UE gemeldet werden könnten, wobei jeder Typ von CQI jeweils einem Wert der CQIs entspricht.

12. Vorrichtung nach Anspruch 8, 9 oder 10,
wobei das Konfigurationsmodul außerdem ausgestaltet ist, um:

eine Klassifizierung in Übereinstimmung mit Kapazitätsebenen des UE zu implementieren, welche den CQIs entsprechen, die von dem UE gemeldet werden könnten, und wobei jeder Typ von CQI jeweils einer Kapazitätsebene des UE entspricht.

13. Vorrichtung nach Anspruch 8, 9 oder 10,
wobei das Konfigurationsmodul außerdem ausgestaltet ist, um:

eine Klassifizierung in Übereinstimmung mit Modulationsmodi zu implementieren, welche den CQIs entsprechen, die von dem UE gemeldet werden könnten, und wobei jeder Typ von CQI jeweils einem Modulationsmodus entspricht.

14. Vorrichtung nach Anspruch 11, 12 oder 13, wobei
ein Wert von J 1, 2, 3, 4, oder 5 sein kann.

**Revendications**

1. Procédé de commande de puissance de boucle extérieure pour un canal partagé de liaison descendante physique haute vitesse, HS-PDSCH, comprenant :

un ordonnanceur d'accès par paquets de liaison descendante haute vitesse, HSDPA, classifiant (200, 301, 401) tous les indicateurs de qualité de canal, CQI, qui pourraient être rapportés par un équipement d'utilisateur (UE), et chaque type de CQI étant (200) configuré respectivement avec une valeur unitaire d'ajustement de boucle extérieure de canal partagé de liaison descendante haute vitesse, HSDSCH, correspondante K et une valeur d'ajustement de boucle extérieure (*swAdjCqi*), la *swAdjCqi* correspondant à chaque type de CQI qui est (201, 302, 402) initialisé pour être 0 respectivement ; et
lorsque ledit ordonnanceur HSDPA reçoit une réponse d'accusé de réception, ACK, retournée depuis ledit UE via un canal de contrôle physique dédié haute vitesse, HSDPCCH, l'ajustement (202, 303, 403) de la *swAdjCqi* correspondant au CQI sur lequel un package d'ordonnancement correspondant à l'ACK est basé de J à la hausse ; lorsque ledit ordonnanceur HSDPA reçoit une réponse d'accusé de réception négatif, NACK, retournée par l'UE via le HSDPCCH, l'ajustement (202, 303, 403) de la *swAdjCqi* correspondant au CQI sur lequel le package d'ordonnancement correspondant au NACK est basé de J*K à la baisse, ledit ordonnanceur HSDPA sélectionnant (203, 304, 404) une taille d'un bloc de transport utilisé dans un prochain ordonnancement en fonction de la *swAdj Cqi* ajustée, où J est un entier.

**2.** Procédé selon la revendication 1, avant l'étape de configuration (200, 301, 401) de chaque type de CQI avec la valeur unitaire d'ajustement de boucle extérieure HSDSCH correspondante K respectivement, le procédé comprenant également : d'abord, ledit ordonnanceur HSDPA établissant un taux d'erreur sur les blocs cible, BLER, pour chaque type de CQI,

où

$$K = (1-BLER\ cible)/BLER\ cible.$$

**3.** Procédé selon la revendication 1, le procédé comprenant :

ledit ordonnanceur HSDPA configurant également (200, 301, 401) tous les CQI qui pourraient être rapportés par l'UE avec une valeur unitaire d'ajustement de boucle extérieure totale HSDSCH M et une valeur d'ajustement de boucle extérieure totale (*swAdjTotalCqi*), et initialisant (201, 302, 402) ladite *swAdjTotalCqi* pour être zéro, où M est 0,01 à 0,03 fois de K ;
lorsque ledit ordonnanceur HSDPA reçoit l'ACK retourné par ledit UE via le HSDPCCH, l'ajustement (202, 303, 403) de ladite *swAdjTotalCqi* de J à la hausse ; lorsque ledit ordonnanceur HSDPA reçoit le NACK retourné par ledit UE via le HSDPCCH, l'ajustement (202, 303, 403) de ladite *swAdjTotalCqi* de J*M à la baisse ; et à l'étape de sélection (203, 304, 404) de la taille du bloc de transport utilisé dans le prochain ordonnancement, ledit ordonnanceur HSDPA sélectionnant (203, 304, 404) la taille du bloc de transport utilisé dans le prochain ordonnancement en fonction des *swAdjCqi* et *swAdjTotalCqi* ajustées.

**4.** Procédé selon la revendication 1, 2 ou 3, dans lequel ladite étape dudit ordonnanceur HSDPA classifiant (200, 301, 401) des valeurs de CQI qui pourraient être rapportés par l'UE comprend :

ledit ordonnanceur HSDPA mettant en oeuvre (401) une classification en fonction des valeurs des CQI qui pourraient être rapportés par l'UE, et chaque type de CQI correspondant à une valeur des CQI respectivement.

**5.** Procédé selon la revendication 1, 2 ou 3, dans lequel ladite étape dudit ordonnanceur HSDPA classifiant (200, 301, 401) des valeurs de CQI qui pourraient être rapportés par l'UE comprend :

ledit ordonnanceur HSDPA mettant en oeuvre une classification en fonction de niveaux de capacité de l'UE correspondant aux CQI qui pourraient être rapportés par l'UE, et chaque type de CQI correspondant à un niveau de capacité de l'UE respectivement.

**6.** Procédé selon la revendication 1, 2 ou 3, dans lequel ladite étape dudit ordonnanceur HSDPA classifiant (200, 301, 401) des valeurs de CQI qui pourraient être rapportés par l'UE comprend :

ledit ordonnanceur HSDPA mettant en oeuvre une classification en fonction de modes de modulation correspondant aux CQI qui pourraient être rapportés par ledit UE, et chaque type de CQI correspondant à un mode de modulation respectivement.

**7.** Procédé selon la revendication 4, 5 ou 6, dans lequel
une valeur de ladite J peut être 1, 2, 3, 4, ou 5.

**8.** Dispositif de commande de puissance de boucle extérieure de canal partagé de liaison descendante physique haute vitesse, HS-PDSCH, comprenant un module de configuration et un module de réception et de traitement qui sont connectés l'un avec l'autre,
ledit module de configuration est configuré pour :

classifier tous les indicateurs de qualité de canal, CQI, qui pourraient être rapportés par un équipement d'utilisateur (UE),
configurer chaque type de CQI respectivement avec une valeur unitaire d'ajustement de boucle extérieure de canal partagé de liaison descendante haute vitesse, HSDSCH, correspondante K et une valeur d'ajustement de boucle extérieure (*swAdjCqi*), et
initialiser la *swAdjCqi* correspondant à chaque type de CQI pour être 0 respectivement ;
ledit module de réception et de traitement est configuré pour : recevoir une réponse d'accusé de réception, ACK, ou une réponse d'accusé de réception négatif, NACK, retournée par l'UE via un canal de contrôle physique dédié haute vitesse, HSDPCCH,

lors de la réception dudit ACK, ajuster la *swAdjCqi* correspondant au CQI sur lequel un package d'ordonnancement correspondant à l'ACK est basé dans ledit module de configuration de J à la hausse ;

lors de la réception dudit NACK, ajuster la *swAdjCqi* correspondant au CQI sur lequel le package d'ordonnancement correspondant au NACK est basé de J*K à la baisse, et

sélectionner une taille d'un bloc de transport utilisé dans un prochain ordonnancement en fonction de la *swAdjCqi* ajustée, où J est un entier.

9. Dispositif selon la revendication 8, dans lequel
ledit module de configuration est également configuré pour : d'abord, établir un taux d'erreur sur les blocs cible, BLER, pour chaque type de CQI, et configurer chaque type de CQI respectivement avec la valeur unitaire d'ajustement de boucle extérieure HSDSCH correspondante K, où K = (1-BLER cible)/BLER cible.

10. Dispositif selon la revendication 8, dans lequel
ledit module de configuration est également configuré pour : configurer tous les CQI qui pourraient être rapportés par l'UE avec une valeur unitaire d'ajustement de boucle extérieure totale HSDSCH M et une valeur d'ajustement de boucle extérieure totale (*swAdjTotalCqi*), et initialiser ladite *swAdjTotalCqi* pour être zéro, où M est 0,01 à 0,03 fois de K ;

ledit module de réception et de traitement est également configuré pour :

lors de la réception dudit ACK, ajuster ladite *swAdjTotalCqi* de J à la hausse ;

lors de la réception dudit NACK, ajuster ladite *swAdjTotalCqi* de J*M à la baisse, et

utiliser un procédé suivant pour sélectionner la taille du bloc de transport utilisé dans le prochain ordonnancement : sélectionner la taille du bloc de transport utilisé dans le prochain ordonnancement en fonction des *swAdjCqi* et *swAdjTotalCqi* ajustées.

11. Dispositif selon la revendication 8, 9 ou 10, dans lequel ledit module de configuration est également configuré pour :

mettre en oeuvre une classification en fonction de valeurs des CQI qui pourraient être rapportés par l'UE, et chaque type de CQI correspond à une valeur des CQI respectivement.

12. Dispositif selon la revendication 8, 9 ou 10, dans lequel ledit module de configuration est également configuré pour :

mettre en oeuvre une classification en fonction de niveaux de capacité de l'UE correspondant aux CQI qui pourraient être rapportés par l'UE, et chaque type de CQI correspond à un niveau de capacité de l'UE respectivement.

13. Dispositif selon la revendication 8, 9 ou 10, dans lequel ledit module de configuration est également configuré pour :

mettre en oeuvre une classification en fonction de modes de modulation correspondant aux CQI qui pourraient être rapportés par ledit UE, et chaque type de CQI correspond à un mode de modulation respectivement.

14. Dispositif selon la revendication 11, 12 ou 13, dans lequel,
une valeur de ladite J peut être 1, 2, 3, 4, ou 5.

| Configuration module | Receiving and processing module |

FIG. 1

Determine the type of the UE and its reported CQI range, and determine the outer loop adjustment unit value K corresponding to each type of CQIs, and meanwhile, set the total outer loop adjustment unit value M for all CQIs

200

Initialize the HSDSCH outer loop adjustment value corresponding to each type of CQIs reported by the UE to be 0 respectively, and meanwhile, initialize the total HSDSCH outer loop adjustment value to be 0

201

202

At each time that the HSDPA scheduler receives the ACK returned by the UE via the HSDPCCH, the HSDSCH outer loop adjustment value corresponding to the CQI on which the scheduling package corresponding to the ACK is based is subtracted by J, and meanwhile, the total HSDSCH outer loop adjustment value is subtracted by J; at each time that receiving the NACK returned by the UE via the HSDPCCH, the HSDSCH outer loop adjustment value corresponding to the CQI on which the scheduling package corresponding to the NACK is based is added by J*K corresponding to the CQI, and meanwhile, the total HSDSCH outer loop adjustment value is added by J*M

When the HSDPA scheduler selects the size of the transport block in each scheduling, it selects the size of the transport block used in this scheduling according to the HSDSCH outer loop adjustment value corresponding to each CQI and the total HSDSCH outer loop adjustment value together

203

FIG. 2

In this embodiment, determine that the CQI range reported by the UE is from 1 to 30, set the corresponding target BLER respectively according to different values of the CQIs, and then calculate the corresponding K value according to each corresponding target BLER $\sim$ 301

Initialize the HSDSCH outer loop adjustment value corresponding to each type of CQIs reported by the UE to be 0 respectively, and meanwhile, initialize the total HSDSCH outer loop adjustment value to be 0 $\sim$ 302

At each time that the HSDPA scheduler receives the ACK returned by the UE via the HSDPCCH, the HSDSCH outer loop adjustment value corresponding to the CQI on which the scheduling package corresponding to the ACK is based is subtracted by J, meanwhile, the total HSDSCH outer loop adjustment value is subtracted by J; if receiving the NACK returned by the UE via the HSDPCCH, the HSDSCH outer loop adjustment value corresponding to the CQI on which the scheduling package corresponding to the NACK is based is added by J*K corresponding to the CQI, meanwhile, the total HSDSCH outer loop adjustment value is added by J*M $\sim$ 303

When the HSDPA scheduler selects the size of the transport block in each scheduling, it selects the size of the transport block used in this scheduling according to the HSDSCH outer loop adjustment value corresponding to CQI latest reported by UE and the total HSDSCH outer loop adjustment value together $\sim$ 304

FIG. 3

Set the corresponding target BLER for each type of CQIs respectively, and then calculate the K value corresponding to each type of CQIs according to each corresponding target BLER, and meanwhile, set the total outer loop adjustment unit values of the single stream CQI, the main stream CQI and the side stream CQI in the double stream to be M1, M2 and M3 respectively

**401**

Initialize the HSDSCH outer loop adjustment value corresponding to each type of CQIs reported by the UE to be 0, and meanwhile, initialize the total outer loop adjustment values corresponding to the three types of CQIs to be 0 respectively

**402**

Once the HSDPA scheduler receives the message returned by the UE via the HSDPCCH, it judges whether it is a single stream or a double stream and then finds out the corresponding CQI

**403**

When the HSDPA scheduler selects the size of the transport block in each scheduling, it selects the HSDSCH outer loop adjustment value corresponding to the CQI latest reported by the UE and the total HSDSCH outer loop adjustment value corresponding to the CQI together, thereby selecting the size of the transport block used in scheduling

**404**

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1503522 A1
- US 2006293075 A1